# EUROPEAN PATENT APPLICATION

(11) **EP 1 985 359 A1**
(43) Date of publication of application: **29.10.2008**
(21) Application number: 08251140.3
(22) Date of filing: 28.03.2008
(51) Int. Cl.: B01J 19/12

(54) **Method and apparatus for microwave assisted processing of feedstocks**

(30) Priority: 24.04.2007 BR PI0701638
(71) Applicant: Petroleo Brasileiro S.A. Petrobras, Rio de Janeiro RJ (BR)
(72) Inventor: Marques Moreira, Elizabeth, Rio de Janeiro, RJ, CEP 22.081-010 (BR); Baldini Cardoso, Mauri José, Rio de Janeiro, RJ, CEP 22.290-175 (BR); Gouveia de Araújo, Sumair, São Paulo, SP, CEP 05.508-900 (BR); Takahashi, Jiro, São Paulo, SP, CEP 05.508-900 (BR); Souza de Alencar, Maurício, Rio de Janeiro, RJ, CEP 22.010.110 (BR)
(74) Representative: Roberts, Mark Peter

(57) **Abstract**

The present invention relates to an improved reactor, which allows microwave-assisted processing of feedstocks or mixtures of hydrocarbons, and the operating system thereof, which operates under high temperatures and pressures of hydrogen or other gases, in continuous of batch mode.

The invention relates to modifications in the geometric configuration of the reactor to process diverse hydrocarbon feedstocks, with or without the addition of catalysts, in the presence or absence of hydrogen or other gases, forming a system which includes a reaction vessel and associated devices, so as to to allow better transmittance of the radiation onto the feedstock to be processed and guarantee maximum absorption of the microwaves by the the reaction medium irrespective of the composition thereof.

## Description

### FIELD OF THE INVENTION

The present invention relates to an apparatus for microwave-assisted processing of feedstocks. Such an apparatus is suitable for use with an improved reactor and associated peripheral systems which enable microwave-assisted processing of feedstocks in general or mixtures of hydrocarbons. The system for processing feedstocks using this reactor operates in continuous or batch mode at high temperatures and pressures of hydrogen or other gases. More specifically, the reactor enables processing or hydroprocessing of feedstocks, and comprises a combination of a reaction vessel with conventional operating characteristics at high temperature and hydrogen pressure, and a source of electromagnetic radiation in the microwave range, connected by means of windows with high transmittance for microwave radiation. Although transparent to this radiation, the window system is capable of maintaining the feedstock inside the reactor in the condition of operation thereof.

The feedstock processing system comprises the combination of the improved reactor for processing feedstocks and a combination of peripheral accessories for supply and control, and can operate with or without any catalyst, which, together with the feedstock, is exposed to said microwaves at high temperature and pressure, including of hydrogen.

### BASIS OF THE INVENTION

Heating by means of electromagnetic radiation in the microwave range is a procedure which is not only well established for domestic use but is also widely used industrially for processing a variety of materials.

Hereafter, electromagnetic radiation in the microwave range (300 MHz to 300 GHz) will be termed simply "microwaves".

Devices allowing this type of heating have been designed for application in bending and straightening rubber; treating materials discarded after use; drying foods, polymer materials, polymers, wood and industrial products (ceramic moulds, automobile industry); producing ceramic and refractory artefacts; accelerating the process of curing concrete; chemical syntheses; polymerization of plastics; sterilization of materials; welding of plastics; recycling and recovery of materials; destroying reject polymers and breaking or grinding rocks, etc.

The technique of heating an absorbing material by exposure to radiation in the microwave range offers the advantage of optimizing the effects of heat in these types of materials due to rapid, direct and localized heating in absorbing materials.

Moreover, the effect on the absorbing material stops when the source of microwave radiation is removed. Other advantages related to the use of electromagnetic radiation in the microwave range for heating can be noted, such as energy savings compared with conventional heating in specific processes in which localized heating and selective heating is desired in materials which have different absorption coefficients for microwaves, shorter processing times, specific interactions between the microwaves and reagents and active sites which absorb microwaves, and rapid, selective and more uniform heating, with minimized wall effects. The synergistic effects which can be obtained by exciting the feedstock and catalysts, and more particularly their active sites, by direct exposure to microwaves in the reaction medium are of special interest.

Microwaves can be conducted between the source of emission and the feedstock or mixture to be irradiated by means of electromagnetic waveguides. Said guides can extend for several metres and follow winding paths with little attenuation of the microwaves. Moreover, the microwave generating device can be remote from the power source thereof.

A device provided with a source of emission of electromagnetic energy in the microwave range, such as, for example, a microwave-assisted reactor, typically comprises a specific valve capable of generating this type of electromagnetic radiation. Said emitter of electromagnetic radiation consists, for example, of a device under vacuum which converts low frequency electrical energy into an electromagnetic field which oscillates at high frequency (microwaves).

Currently, radiation in the microwave range for industrial applications can be generated by a variety of devices, such as, for example, "magnetrons", "power grid tubes", "klystrons", "klystrodes", "crossed field amplifier", "travelling wave tubes" (TWT) and "gyrotrons". These devices are constructed in accordance with the scale of application, to operate with a wide range of power and frequency of radiation.

In the case of a magnetron device, a constant potential difference is applied between the poles: the anode, which is a hollow cylinder with characteristic cavities in the periphery thereof, and the cathode. The electrons are accelerated from the cathode to the anode, but the presence of a strong magnetic field between the two poles (produced by an electromagnet) causes the electrons to describe a curved trajectory and follow a spiral path, producing a radiofrequency. An antenna conducts the electromagnetic radiation present in the cavities in the vicinity of the anode to the outside of the magnetron. The waves are conducted by a waveguide to the cavity containing the material to be processed. The metal walls inside the device absorb little energy, and most of the energy is reflected until absorbed by the material being irradiated.

One aspect relating to the improved device which is the object of the present invention is selective heating of materials and maximized transmission of energy to the reaction medium, independent of the type of feedstock and catalyst, although interaction with the microwaves varies depending on the properties of the material. This aspect is of particular relevance when using materials with catalytic activity, given that this characteristic is preferably combined with the preferential heating promoted by microwaves. The action of microwaves on the reaction medium can occur by interaction thereof with the dipoles of polar molecules or free ions in liquid and gaseous reactants as well as interaction thereof with solid materials, conductors or non-conductors, or specifically with the active sites thereof added to the reaction medium.

Electrically conductive materials (metals, for example) reflect microwaves almost totally and are heated primarily by ohmic losses, which is superficial and decrease in intensity as conductivity increases. On the other hand, insulating materials, also termed dielectrics, can be transparent or opaque to microwaves depending on their dielectric loss factor, also termed the imaginary part of electrical permissivity, and hereafter referred to only as, the "loss factor". The size of the loss factor is a function of the frequency of the electromagnetic radiation and the temperature of the material.

Dielectrics with a low loss factor are transparent to microwaves and not very susceptible to heating by the same, while those with a high loss factor convert electromagnetic energy into heat energy, and are heated by absorption and concomitant attenuation of the microwaves as these propagate therein. This process is termed dielectric heating, and differs from heating by conduction or convection (used in conventional processes with combustion or electrical resistances as heat sources) in that it can act differently on the feedstocks, reactants and catalysts, even when these are in direct contact with one another and homogeneously mixed. The description of the process of microwave heating involves various physical and chemical concepts, such as temperature, heat capacity, chemical bonding, molecular structure, dipole moment, induced polarization, dielectric constant or relative permissivity, complex permissivity (real and imaginary), conductivity, Joule effect, and ohmic losses, etc.

Dielectric heating by microwaves is a convenient and effective way of carrying out chemical reactions in appropriate, generally polar, media, or in reaction media in which use is made of addition of materials which absorb microwaves, such as various types of catalysts.

The growing need to process ever heavier petroleum fractions with high contents of contaminants, high density and viscosity, naphthenic acidity, and which are able to form oil/water emulsions which are difficult to separate, is a major challenge for the national and international refining industry. Various approaches have been suggested in the attempt to facilitate processing of this type of petroleum and obtain derived products of greater added value.

Irradiating materials with electromagnetic radiation in the microwave range is used in various industrial applications as an alternative means for heating specific systems. Articles and patents claim the successful use of microwave technology to accelerate chemical processes which demand heating, and some other applications in petroleum processing. However, there are no known systems suited to microwave-assisted processing of feedstocks, at high temperatures and high hydrogen pressures

In the present invention, "feedstock" means materials such as crude oil, mixtures of hydrocarbons, fractions from petroleum processing, oils of plant origin, synthetic oils, biodiesel, organic products such as alcohols and esters, inorganic products compounds such as catalysts, and mixtures of these products, among others.

The technique for microwave-assisted processing being studied is based on the capacity to cause an interaction or rapid and selective heating in the materials in accordance with the dielectric characteristics thereof, making it possible to initiate chemical reactions by accelerating the kinetics thereof and consequently modifying the properties of these irradiated materials in a shorter time.

Most of the technical advances in the field of engineering for petroleum refining began in 1913 with the introduction of the technique of thermal cracking, followed by the advent of the technique of catalytic cracking in 1936. The introduction of catalytic systems made more rapid and selective reactions possible, while hydrogenation processes enabled the removal of contaminants and the customization of petroleum fractions to the specifications demanded by industrial processes.

In parallel, advances in the field of engineering for prospecting for petroleum (crude oil) and natural gas, drilling, and technology for transportation, has enabled growth in demand for petroleum and petroleum-based products. This has allowed an increase in worldwide production of crude oil from 150 million barrels per year in 1900 to approximately 22,000 million barrels per year in 2000. At the same time the oil companies have been under increasing pressure, both from society and from governments, to make efforts to develop processes with increasingly less impact on the environment. Against this background within the industry, one of the principal problems which needs to be highlighted is the large volume of contaminants, such as, for example, toxic effluents produced by different chemical processes.

Efforts have been made to minimize discharge of contaminants, by various different means, such as using appropriate alternative reactants, processes giving greater conversion and selectivity for the desired products, use of specific catalysts, as well as recycling reactants and catalysts employed in these products.

Solid catalysts have been developed in order to decrease formation of undesirable by-products, remove said contaminants, and improve the efficiency of the reaction process (acceleration and selectivity of chemical reactions).

The microwave energy is preferably absorbed by the active sites of the catalysts, but not by the hydrocarbon feedstock, such as, for example, heavy petroleum, or by the reservoir vessel. The direct application of this technology enables indirect heating of the hydrocarbons in the feedstock, such as, for example, petroleum, fractions and derivatives, by local heating due to the presence of the catalysts, which transmit the energy (heat) by conduction (CUNDY, C. "Microwave Techniques in the Synthesis and Modification of Zeolite Catalysts. A Review Collect" , Czech. Chem, Commun. 63: pp. 1699-1723, 1998).

Organic reactions with heterogeneous catalysis have been widely employed in industrial contexts. These reactions are successful, because the catalysts, supported on porous compounds, show optimum dispersion of the reactive sites, increasing the selectivity and efficiency of the traditional reactions.

The initial experiments with a technique for accelerating reaction by microwaves were carried out with solvents having high dielectric coefficients, such as dimethylsulphoxide and dimethylformamide, causing superheating during the reactions. However, the application of this technique has attracted attention recently with studies of reactions on solid supports in solvent-free conditions (VARMA, R. S. "Solvent-free accelerated organic synthesis using microwaves", Pure Appl. Chem, Vol. 73 (1), pp. 193-198, 2001).

In reactions on solid supports in solvent-free conditions, organic compounds adsorbed on the surface of inorganic oxides such as alumina, silica gel, clays, or modified supports absorb this radiation, while the solid supports do not absorb it. The temperature during the reaction in the inorganic structure is relatively low; however, during the process the temperatures close to the reagents on the surface of the support are extremely high. Reactions assisted by irradiation with microwaves, in the absence of any solvent, also make it possible to work with open flasks, depending on the feedstock being processed, avoiding the risk of high pressures (VARMA, R. S. " Solvent-free accelerated organic synthesis using microwaves" , Pure Appl. Chem, Commun. Chem, Vol. 73(1), pp. 193-198, 2001).

Application of the method and the combination of the devices for emitting electromagnetic energy for processing mixtures of hydrocarbons are usually presented in the specialized literature, as shown below.

EBERHARD et al. ("Microwave enhanced Hydrogenations at Medium Pressure Using a Newly Constructed Reactor" Tetrahedron Letters, 46, pp. 1247-1249, 2005) teach the construction of a reactor for microwave-assisted hydrogenation, which allows the process to be carried out at a pressure of up to 2500 kPa (25 bar), by modifying a commercial microwave oven.

COUTINHO et al. ("Avaliação da Aplicação da Tecnologia de Microondas no Aquecimento de Diferentes Emulsões Água-Óleo" [Evaluation of application of microwave technology for heating different water-oil emulsions"] presented at the 3rd Brazilian Conference on R&D in Petroleum and Gás, Salvador, BA, Brazil, October 2005) disclose processing of crude oil/water emulsions in a commercial microwave reactor adapted to operate with pressures of up to 3500 kPa (35 bar).

PIPUS et al. ("Esterification of Benzoic Acid with 2-Ethylhexanol in a Microwave Stirred-Tank Reactor", Ind. Eng. Chem. Res., 41(5), pp. 1129-1134, 2002) studied catalysed esterification of benzoic acid. For this purpose they developed a system applying microwaves which were generated by 2.45 GHz Magnetron valve providing ca. 460 W of power, coupled to a waveguide and finally to a stirred reaction tank into which the microwaves passed through a window made of a specific polymer. The volume of the reaction vessel was 500 ml, and the maximum temperature and pressure tested were 256°C and 1200 kPa (12 bar), respectively.

Studies on dehydrogenation have been performed by KIM et al. ("Dieletric catalysts for Microwave-Induced Dehydrogenation of Ethane into Ethylene" Paper 467, 9th Asian Pacific Confederation of Chemical Engineering Congress). These studies relate to a process for ethane dehydrogenation in a quartz reactor using a microwave system which comprises a generator, a waveguide and devices for measuring power, which can be adjusted so as to maintain the variation in power in the range 0.25 à 2.5 kW.

Patent document US 6867400 describes a method and associated apparatus for carrying out chemical reactions continuously, aided by microwaves, with simultaneous monitoring of pressure and cooling. However, the equipment described cannot be employed for hydrogenation reactions under severe conditions of temperature and pressure.

Patent document US 6614010 describes a device for heating a sample, such as, for example, a chemical mixture. More specifically, it relates to a device for microwave heating comprising a microwave generator, a waveguide for guiding the microwaves generated and a deflector. In said device, the conditions of resonance and the radiation coupling factor from the waveguide to the resonant cavity are readily adjustable by rotating the deflector. The conditions of resonance and the radiation coupling factor can be adjusted in response to the dielectric properties of the sample so as to optimize the quantity of power absorbed and thus control the process of heating the sample. The proposed device, however, does not operate under severe conditions of temperature and pressure.

Patent document JP 2002-113350 [A] proposes a vessel for chemical reactions which operates under high temperatures and pressures and is free from restrictions in relation to windows. Said vessel is provided with a device which acts as a source of microwaves to promote the initiation of the chemical reaction, consisting of a hollow waveguide with, or having installed in an opening in the coaxial line thereof, a first window which acts as a dividing window. The vessel is made up of a pressure-resistant container and a reaction vessel, and has the reaction vessel, hermetic and resistant to heat and/or corrosion, inside said pressure-resistant container; the vessel thus formed enables the pressure inside the pressure-resistant container and the reaction vessel to be controlled, said internal pressures preferably being equal. The materials to be heated in the container are: reaction systems at high temperature and high pressure, containing microwave-absorbing material and/or catalysts made of microwave-absorbing materials; systems of fluids in a sub- or super-critical state at high temperature and high pressure and/or an electrolytic reaction system; a photochemical reaction system; reaction systems using ultrasound, and reaction systems using a method of external heating. Although generic reference is made to high temperatures and pressures, the document does not mention the ranges of temperature and pressure considered to be high. The specialist technical literature in general considers high pressure to be above 500 kPa.

Patent document US 5382414 describes an apparatus for promoting chemical and/or physical reactions under pressure in samples by the action of microwaves. The vessel has one or more containers to be inserted therein, at least partially permeable to microwaves, which receive the samples, and are placed in a special enclosing cover such that they are connected via at least one opening so as to connect them to a microwave generator. In order to allow the reactions to be carried out at higher pressures and to obtain overall savings, the invention proposes that the enclosing cover of the device includes at least one pressure vessel of high-pressure-resistant material, the connecting orifices of which are permeable to microwaves and sealed so as to resist high pressures. A single device should be inserted into the pressure vessel so as to be firmly adjusted against the internal surface thereof. The pressure vessel is made of material impermeable to microwaves, such as, for example, stronger metal material; only the material in the vicinity of the connecting opening needs to be permeable to microwaves. Pressures of 1000 bar or more can be used. The covering can be configured in the form of a receptacle comprising two parts, which serve to receive the sample and close the connecting hole, and are permeable to microwaves, at least in this region near the opening. The sample container is elastically deformable such as a plastic material permeable to microwaves or ceramic material, and preferably PTFE.

Patent document US 6120741 describes a device which uses microwaves to carry out chemical or physicochemical reactions with a large nominal quantity of product (1 litre), which can be considered to be a large scale when compared with other devices hitherto known and used only in experiments with small samples. Said device comprises a vessel sealed with a lid in substantially cylindrical format, with a cavity to contain a reactor of ca. 1 litre, made of material transparent to microwaves. The cavity is surrounded by a cylindrical wall resulting from rotation around the axis thereof, has a lower wall provided with a port for microwaves to enter the vessel, positioned along the longitudinal X axis thereof, and an upper opening for placing and removing the reactor. The generator provides microwaves, which propagate via the entry port of the cavity, which can be predetermined along the X-axis. The sealing lid stops the microwaves from propagating outside the device. The dimensions of the cavity are set to guarantee a homogeneous distribution of the microwaves in the interior thereof. The device preferably acts under atmospheric pressure, but can operate at higher pressures or at lower pressures if the reactor is suitable thereunto.

Although the literature cites various techniques relating to processing of hydrocarbon feedstocks by means of microwaves, no commercial reactor model employing radiation in the microwave range for laboratory use and also industrial use is suited to operation both at elevated temperatures and pressures and in the presence of hydrogen.

In order to solve the problems mentioned above, the applicant has developed a device for processing hydrocarbons, the subject of Brazilian patent application PI 0605000-0, of 30/11/2006, entitled "Dispositive e sistema para processamento de cargas de altas temperature e pressão ne presence de microondas" ["Device and system for processing feedstocks at high temperature and pressure in the presence of microwaves"], which is provided with a source of emission of electromagnetic energy in the microwave range capable of operating under severe conditions of temperature and pressure, and also in the presence of hydrogen. Although giving excellent results, it has been noted that this device could be further improved, with the objective of maximizing use of the energy incident on the reaction medium. It has been found, for example, that by making the microwaves hit the feedstock at an angle such that there is no reflection of the same, the energy would be totally absorbed by the feedstock irrespective of the reaction medium and its different characteristics. The resulting studies have led to the improvement of the aforementioned device, which constitutes the reactor for hydroprocessing feedstocks, which is the object of the present invention, which is part of the microwave-assisted system for processing feedstocks proposed herein.

### SUMMARY OF THE INVENTION

According to a first aspect of the present invention there is provided an apparatus for microwave-assisted processing of feedstocks, said apparatus comprising: a reaction vessel, and a waveguide for transmitting microwaves into said reaction vessel, wherein said reactor is constructed and arranged such that microwaves transmitted by said waveguide have an angle of incidence with respect to a surface of a reaction medium contained in said reaction vessel which is an acute angle. The invention allows that the microwaves to hit the reaction medium (catalyst and feedstock) at a specified angle preferably such that energy transmission is maximized, irrespective of the reaction medium to be processed.

Preferably, microwaves transmitted by said waveguide and propagating inside said reaction vessel are subject to a gradual variation in impedance within said reaction vessel. This gradual increase in impedance means that less microwaves are reflected as compared to sudden increase in impedance.

Preferably, the inclination of said waveguide is adjustable between 10° and 40° to the horizontal. In a preferred embodiment, the inclination of said waveguide is approximately 25° to the horizontal.

Preferably, the reflection of microwaves from said reaction medium surface is less than the reflection that would be obtained if the angle of incidence were 90°. Therefore, preferably, an improved transmission of energy to the reaction medium is achieved.

The reaction medium preferably comprises a liquid phase. The reaction vessel may also be arranged such that reaction medium takes the form of a wedge. These features ensure that the microwaves are incident upon the reaction medium at the desired angle. The surface of said reaction medium may define a transition zone between a gas phase and said reaction medium at which the gradual variation in impedance occurs as microwaves cross the transition zone.

The reaction vessel is preferably constructed to operate at pressures from atmospheric pressure to 20MPa. The reaction vessel may also be constructed to operate at temperatures from room temperature to 500°C. The system operates preferably at a pressure of up to 17.2 MPa (172 bar/2500 psi); however, the present system can operate at pressures varying from 100 kPa to 20 MPa. As regards temperature, the system for processing hydrocarbons preferably operates at up to approximately 400°C, although this temperature can vary from room temperature to 500°C. Nevertheless, said system for processing feedstocks of the invention allows operation in the entire region of temperature and pressure with the same efficiency of microwave transmission, depending on the feedstock and the process being carried out.

Preferably, the apparatus can be operated in three different modes: conventional heating or cooling, microwave heating combined with conventional heating or cooling, and microwave heating alone. The apparatus may further comprise means for heating or cooling by conduction or means for heating or cooling the feedstock by circulating fluids. This enables a combination of heating methods to be used for a given feedstock.

Preferably, the reaction vessel is constructed such that it can be operated in continuous or batch processing modes. This allows the apparatus to be used in a wide variety of processes where it might be of benefit.

Preferably, reaction vessel comprises a head piece, and said reaction vessel is arranged such that said reaction medium covers said head piece. Preferably, according to this arrangement, the microwaves entering the reaction vessel are directly transmitted into the reaction medium, rather than being directly incident upon the headpiece of the reaction vessel.

Preferably, said waveguide is connected to said reaction vessel via windows substantially transparent to microwaves.

Preferably, the apparatus further comprises: a first lower segment, comprising a low-noise power source, a microwave-emitting magnetron valve, a microwave non-return isolator and sensors of transmitted and reflected waves; a second segment, comprising a first stretch of said waveguide, with a rectangular cross-section, which links parts which can be freely orientated with parts that need to be arranged at a suitable inclination to the horizontal, and which, after said inclination, is connected to a second, transition, stretch between sections of said waveguide with rectangular and circular cross-sections, responsible for the transition between the rectangular and circular sections of said waveguide and for matching the impedances with said windows substantially transparent to microwaves, and which function to guide said microwaves towards said reaction vessel; a third, upper, segment comprising said windows substantially transparent to microwaves, which are intercalated by a stretch of said waveguide, said windows being connected in turn to a fourth segment, which comprises said reaction vessel. The emitter of electromagnetic radiation operates at a frequency of 300 MHz to 300 GHz, and the reaction medium (catalyst together with the feedstock) placed in the reaction vessel is irradiated with said microwaves at high temperature and high pressure, including in the presence of hydrogen or other gases.

In one embodiment, the microwave-emitting magnetron valve provides pulsed emission of magnetic energy. The microwave frequency is preferably 2.45 GHz. In an alternative embodiment the microwave-emitting magnetron valve provides continuous emission of magnetic energy. Preferably the microwave radiation is carried out continuously with a power in the range 2-3 kW. In particular, the microwave radiation may be carried out continuously at a power of 2 kW.

Preferably, the microwave-emitting magnetron valve can be scaled to operate with multiple powers of microwaves.

Preferably, the second segment has a suitable curvature, to connect said waveguides of said first and third segments respectively.

Preferably, the apparatus further comprises means for adjusting said third, upper, segment, which enables matching of the impedance of said waveguide with the impedance of said windows and said reaction vessel.

Preferably, the windows enable the apparatus to withstand high pressures and maintain high microwave transmission throughout the whole period that the temperature of said reaction vessel is changing, and also to tolerate variations in the frequency of the source. The material for the windows may be selected from sapphire, quartz, glass, and ceramics. Further, the windows are preferably capable of withstanding high pressures and high temperatures. This ensures that the apparatus can be used under the conditions required for feedstock processing.

Preferably the dimensions of said waveguide and windows are adjusted in accordance with a selected microwave frequency.

Preferably the reaction vessel has external cladding to thermally insulate the apparatus and also to contain any leakage of microwaves or reagents, keeping the entire apparatus hermetic.

Preferably, the processing, for which the apparatus for microwave-assisted processing of feedstocks is used, comprises hydroprocessing.

Preferably the reaction vessel is provided with an accessory subsystem formed by a temperature sensor, a system for loading and collecting material and a circulation/agitation system, which allow said reaction vessel to operate with highly viscous liquids, in the presence or absence of solids, and maintain the homogeneity of said reaction medium.

Preferably, the apparatus is connected to an electronic control and supervision unit which enables interaction with, and measurement and monitoring of, the variables involved in the process. The return of information to said electronic control and supervision unit is may be by means of wave sensors situated in a longitudinal portion of said waveguide, which sensors are directly connected to said electronic control and supervision unit. The electronic control and supervision unit may further comprises: a programmable logic controller PLC which contains analogue and digital input and output modules for all of the signals of the field elements needed to control the processing system, and which digitalizes and processes the signal for the microwave radiation (transmitted and reflected) identified by the wave sensors by means of a computer program; a central management unit provided with a monitor as an interface with the operator, which has additional integrated modules for signal processing and storage, a graphics interface to display the data processed; and a data acquisition module, which serves as an interface between the field and process control elements.

The apparatus may be designed in different scales depending on operating needs, adapted to the power of the microwaves, and the volume and shape of said reaction vessel, and able to use microwave radiation of different frequencies.

The apparatus may be used in processes to decrease naphthenic acidity, the content of sulphur (HDS - hydrodesulphurization) of nitrogen (HDN - hydro-denitrilation), of oxygen (HDO - hydrodeoxygenation) of aromatics (HDA - hydrodearomatization) and of metals (HDM - hydrodemetalization), as well as for breaking carbon chains such as, for example, hydrocracking (HCC) of heavy petroleum and fractions thereof.

The feedstock may comprise crude oil, mixtures of hydrocarbons, from petroleum processing, oils of plant origin, biodiesel, organic products such as alcohols and esters, inorganic products end mixtures of these products, in the presence or absence of a catalyst, and in the presence of hydrogen or other gases.

The apparatus may be used for processing crude petroleum or fractions thereof, mixtures of hydrocarbons, including in multiphase mixtures of oils in the form of sludge and emulsions of petroleum in water, and materials such as catalysts which absorb microwaves.

The feedstock may comprise any type of catalyst or microwave absorbing material with active sites which can have their performance enhanced by the action of the microwaves.

According to another aspect of the invention there is provided a method for microwave-assisted processing of feedstocks, said method comprising: transmitting microwaves via a waveguide into a reaction vessel containing a reaction medium, such that said microwaves have an angle of incidence with respect to a surface of said reaction medium which is an acute angle.

In a preferable embodiment of the method, microwaves which are transmitted by said waveguide and propagate inside said reaction vessel are subject to a gradual variation in impedance within said reaction vessel.

In a preferable embodiment of the method, said waveguide is inclined at an angle to the horizontal.

In a preferable embodiment of the method, the reflection of microwaves from said reaction medium surface is less than the reflection that would be obtained if the angle of incidence was 90°.

In a preferable embodiment of the method, said reaction medium comprises a liquid phase.

In a preferable embodiment of the method, said reaction vessel is arranged such that reaction medium takes the form of a wedge

In a preferable embodiment of the method, said surface of said reaction medium defines a transition zone between a gas phase and said reaction medium, and said gradual variation in impedance occurs as microwaves cross said transition zone.

In a preferable embodiment of the method, said processing occurs at pressures from atmospheric pressure to 20 MPa.

In a preferable embodiment of the method, said processing occurs at temperatures from room temperature to 500°C.

Preferably, the method for microwave-assisted processing of feedstocks comprises hydroprocessing.

In a preferable embodiment of the method, the method further comprises interaction with, and measurement and monitoring of, the variables involved in the process.

In one embodiment, there is provided a reactor for microwave-assisted processing of feedstocks, that is constituted of four distinct sections, namely:
A) a first lower segment, which comprises a low-noise power source, a microwave-emitting magnetron valve which enables pulsed or continuous emission of magnetic energy, and which can be scaled to operate with multiple windows and powers of microwaves, a microwave non-return isolator and sensors of transmitted and reflected waves;
B) a second segment which constitutes a first stretch of the waveguide, with a rectangular cross-section, which links the parts which can be freely orientated with the parts that need to be arranged at a suitable inclination (θ) to the horizontal, and which, after said inclination, are connected to a second, transition, stretch between waveguides with rectangular and circular cross-sections, responsible for the transition between the rectangular and circular waveguides and for matching the impedances with the windows transparent to microwaves of the third segment, and which function to guide the microwaves towards the a reaction vessel;
C) a third, upper, segment provided with windows transparent to microwaves, constituted by different materials which combine properties of high heat stability and high pressure resistance and intercalated by a stretch of waveguide; said windows are connected in turn to the fourth segment, which comprises the reaction vessel for processing the feedstock or mixture of hydrocarbons;
D) said reaction vessel is made up of a metallic container provided with a head, preferably made of stainless steel, and said container, due to the suitable inclination of the principal portion of the reactor relative to the horizontal, causes the reaction medium to take the form of a wedge, bringing about a gradual variation in the impedance imposed on the microwaves when they propagate inside the improved reactor and cross the transition zone between the media filling the reaction vessel.

In one embodiment, there is provided the aforementioned reactor for microwave-assisted processing of feedstocks, characterized in that said second segment has a suitable curvature, needed to connect the waveguides of the first and second segments, respectively.

In one embodiment, there is provided the aforementioned reactor for microwave-assisted processing of feedstocks, together with the means for adjusting the third, upper, segment, such as screws, enables matching of the impedance of the waveguide with the impedance of the window system and the reaction vessel.

In one embodiment, the inclination of the third, upper, segment, can be changed between 10° and 40° if necessary, but is normally set to approximately 25° with respect to the horizontal.

In one embodiment, the reactor for microwave-assisted processing of feedstocks, can operate at pressures varying from atmospheric pressure to 20 MPa, and process hydrocarbons, preferably at approximately 400°C, although this temperature can vary from room temperature to 500°C.

In one embodiment, the reaction vessel has external cladding to thermally insulate the system and also to contain any leakage of microwaves or reagents, keeping the entire system hermetic.

In one embodiment, the reaction vessel is cladded, allowing conventional heating of the feedstock by heat conduction, using electrical resistances or other means, or heating or cooling by circulating fluids.

In one embodiment, it is possible to operate using conventional heat sources, or joint operation combining a conventional source with microwaves, or alternating operation with a conventional source or with a microwave source.

In one embodiment, the system for containing pressure with multiple windows enables the system to withstand high pressures and maintain high microwave transmission throughout the whole period that the temperature of the reaction vessel is changing, and also to tolerate variations in the frequency of the source.

In one embodiment, the reactor for microwave-assisted processing of feedstocks allows pulsed or continuous application of microwaves.

In one embodiment, the microwave radiation can be carried out continuously at a power preferably of 2 kW; with possible variation in the range 2-3 kW; in the case of pulsed energy emission the maximum power is preferably close to up to 8 kW and frequency is preferably 2.45 GHz.

In one embodiment, the reaction vessel is provided with an accessory subsystem formed by a temperature sensor, a system for loading and collecting material and a circulation/agitation system, which allow the reaction vessel to operate with highly viscous liquids, in the presence or absence of solids, and maintain the homogeneity of the reaction medium.

In one embodiment, the material of the windows transparent to microwaves in the improved reactor are selected from sapphire, quartz, glass, and ceramics, among others.

In one embodiment, the reactor for microwave-assisted processing of feedstocks can be connected to an electronic control and supervision unit where the return of information is controlled by means of wave sensors situated in the longitudinal portion of the instrumentalized waveguide which are directly connected to the electronic control and supervision unit.

In one embodiment the electronic control and supervision unit includes a programmable logic controller PLC which contains analogue and digital input and output modules for all of the signals of the field elements needed to control the processing system, said PLC digitalizes and processes the signal for the microwave radiation (transmitted and reflected) identified by the wave sensors by means of a computer program (software), a central management unit provided with a monitor as an interface with the operator, which has additional integrated modules for signal processing and storage, a graphics interface for the data processed and for the operator to accompany the process in a clearer and easily visualized manner, and a data acquisition module, which serves as an interface between the field and process control elements.

In one embodiment, the reaction vessel can have multiple windows or windows of different areas and thicknesses, capable of withstanding high pressures and high temperatures.

In one embodiment, the reactor for microwave-assisted processing of feedstocks allows operation using conventional heat sources, or joint operation combining a conventional source with microwaves, or alternating operation with a conventional source or with a microwave source.

In one embodiment, the reactor for microwave-assisted processing of feedstocks can be designed in different scales depending on operating needs, adapted to the power of the microwaves, and the volume and shape of the reaction vessel, and able to use microwave radiation of different frequencies.

In one embodiment there is provided a system for microwave-assisted processing of feedstocks, characterized in that it includes a combination formed by an improved reactor and an electronic control and supervision unit, with said improved reactor being suitably inclined (θ) with respect to the horizontal, which includes a reaction vessel connected to a microwave source via windows with high transmittance for said microwaves, and is capable of operating at high temperature and high pressure, in the presence or absence of a catalyst, in continuous or batch mode, while said electronic control and supervision unit enables measurement and monitoring of the variables involved in the process, and interaction with the same.

In one embodiment the system for microwave-assisted processing of feedstocks is operated in three different modes: conventional heating or cooling, microwave heating combined with conventional heating or cooling, and microwave heating alone.

In one embodiment the automatic control allows pulsed or continuous application of microwaves.

In one embodiment, the microwave radiation can be carried out continuously at a power preferably of 2 kW; with possible variation in the range 2-3 kW; in the case of pulsed energy emission the maximum power is preferably close to up to 8 kW, and frequency is preferably 2.45 GHz.

In one embodiment the system for microwave-assisted processing of feedstocks can be designed in different scales depending on operating needs, adapted to the power of the microwaves, and the volume and shape of the reaction vessel, and able to use microwave radiation of different frequencies.

In one embodiment, the dimensions of the waveguides and windows of the improved device are adjusted in accordance with the selected microwave frequency.

In one embodiment the system for microwave-assisted processing of feedstocks can be used in processes to decrease naphthenic acidity, the content of sulphur (HDS - hydrodesulphurization) of nitrogen (HDN - hydro-denitrilation), of oxygen (HDO - hydrodeoxygenation) of aromatics (HDA - hydrodearomatization) and of metals (HDM - hydrodemetalization), as well as for breaking carbon chains such as, for example, hydrocracking (HCC) of heavy petroleum and fractions thereof, improving the quality of the feedstock being processed.

In one embodiment, the feedstock comprises crude oil, mixtures of hydrocarbons, from petroleum processing, oils of plant origin, biodiesel, organic products such as alcohols and esters, inorganic products end mixtures of these products, among others, in the presence or absence of a catalyst, and in the presence of hydrogen or other gases.

In one embodiment the system for microwave-assisted processing of feedstocks can be used to process hydrocarbon feedstocks contained in storage tanks or a ship for transporting oil to reduce the viscosity thereof and increase the productivity thereof.

In one embodiment the system for microwave-assisted processing of feedstocks can be used for crude petroleum or fractions thereof, mixtures of hydrocarbons even in multiphase mixtures of oils in the form of sludge and emulsions of petroleum in water, materials such as catalysts, which absorb microwaves.

In one embodiment the system for microwave-assisted processing of feedstocks allows any type of catalyst or microwave absorbing material to be added to the hydrocarbon feedstock, active sites of which can have their performance enhanced by the action of the microwaves.

An improved system for hydroprocessing feedstocks comprises the combination formed by an improved reactor, which includes a reaction vessel coupled to a microwave source by means of windows with high transmittance of the aforementioned microwaves, capable of operating at high temperature and high pressure, in the presence or absence of a catalyst, in continuous or batch mode, and in the presence of hydrogen or other gases.

### DESCRIPTION OF THE DRAWINGS

The invention will now be described, by way of example only, with reference to the accompanying drawings, in which:
Figure 1 is a schematic representation of the improved reactor for processing feedstocks or mixtures of hydrocarbons.
Figure 2 is a schematic representation of the system for processing feedstocks or mixtures of hydrocarbons, which includes the improved reactor which is the object of the present invention.
Figure 3 is a schematic representation of the simple window transparent to microwave electromagnetic radiation.
Figure 4 is a schematic representation of the double window transparent to microwave electromagnetic radiation.

### DETAILED DESCRIPTION OF THE INVENTION

The system for hydroprocessing feedstocks of the invention comprises a combination formed by the improved reactor for processing feedstocks and its peripheral accessories. The system includes the reaction vessel, the emitting source and the waveguides for electromagnetic radiation in the microwave range. The system can operate in the presence or absence of a catalyst, which, together with the feedstock, is subjected to irradiation by said microwaves at high temperature and high pressure, with hydrogen or other gases, so as to make best use of the energy incident on the reaction medium. More specifically, the improvement which is the object of the present invention relates to a modification in the geometric configuration of the reactor which suits it for processing the most different types of hydrocarbons. The improved reactor includes a device for conducting the microwaves, which allows better transmittance of the radiation onto the hydrocarbon feedstock to be processed so as to guarantee maximum absorption of the microwaves by the hydrocarbon feedstock.

"Feedstock" means crude oil mixtures of hydrocarbons fractions and residues from petroleum processing, biodiesel, oils of plant origin, organic products such as alcohols and esters, inorganic products such as catalysts, and mixtures of these products, among others.

In order to more easily understand the invention, it is described in detail with reference to the drawings which accompany this report and are an integral part thereof.

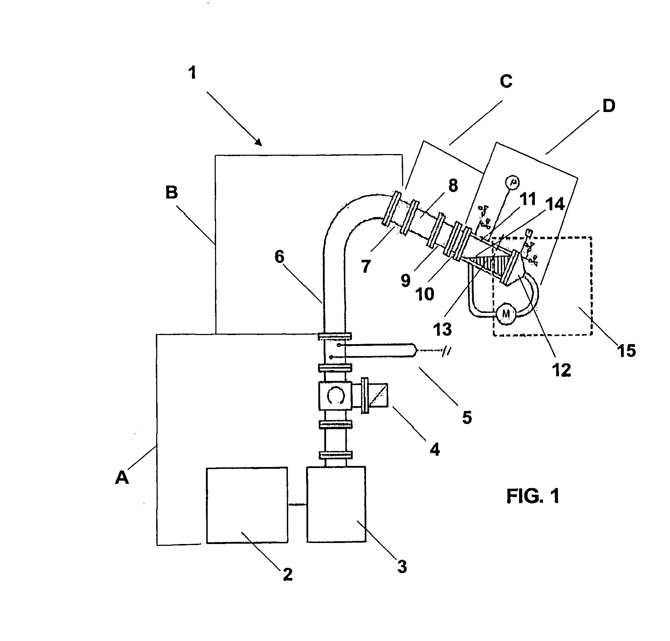

Figure 1 is a schematic representation of the improved reactor which is the object of the present invention. The improved reactor (1) developed to process hydrocarbons is subdivided into four distinct segments. The first, lower, segment (A), comprises a low-noise power source (2) a microwave-emitting magnetron valve (3) which enables pulsed or continuous emission of magnetic energy, and which can be scaled to operate with multiple windows and microwave powers, a microwave non-return isolator (4) and sensors (5) of transmitted and reflected waves. The second segment (B) constitutes a first stretch of the waveguide, with a rectangular cross-section (6) which links the parts which can be freely orientated (which do not affect the application of the microwaves) with the parts that need to be arranged at a suitable inclination (0) to the horizontal. After said inclination the first stretch of wave guide connects to a second, transition, stretch, between waveguides with rectangular and circular cross-sections (7), responsible for the transition between waveguides (rectangular to circular) and for matching the impedances with the windows transparent to microwaves of the third segment. The second stretch of wave guide functions to guide the microwaves towards the reaction vessel (situated at the end of the device). The third segment (C), is provided with windows transparent to microwaves (8, 10), constituted by different materials which combine properties of high heat stability and high pressure resistance and are intercalated by a waveguide (9). Said windows are connected in turn to the fourth segment (D) which comprises the reaction vessel (11) for processing the feedstock or mixture of hydrocarbons. The reaction vessel (11) is made up of a metallic container preferably made of stainless steel, and provided with a head (12). Due to the suitable inclination of the principal portion of the reactor relative to the horizontal, said container causes the reaction medium (13) to take the form of a wedge, thus bringing about a gradual variation in the impedance imposed on the microwaves when they propagate inside the improved reactor (1) and cross the transition zone (14) between the media filling the reaction vessel (11) - the gas phase and the reaction medium. The inclination (θ) between the axis of the waveguide (9) and the horizontal can be changed between 10° and 40° if necessary, but is normally set to approximately 25° with respect to the horizontal, which means that the power of the microwaves can be transmitted with a low coefficient of reflection to feedstocks with widely differing dielectric characteristics. The angle of the waveguide can preferably be adjusted to determine the angle of incidence of the microwave to the surface of the feedstock. The angle of incidence is defined as the angle between the line along which the microwaves propogate and the orthogonal projection of that line onto the surface of the reaction medium. The angle of incidence is preferably an acute angle to minimise reflection.

There is no preferred orientation for the first, lower, segment (A), shown in Figure 1, and it has been shown as vertical merely to illustrate the fact there is no need for this segment to have the same inclination (θ) as the reaction vessel (11). The second segment (B) has a suitable curvature, needed to connect the waveguides of the first and second segments (A, C), respectively. At the end of the second segment (B) closer to the third, upper, segment (C), there is a rectangular waveguide element forming a transition (6) to the circular waveguide (7). This configuration, together with the means for adjusting the third segment (C), such as suitable screws, enables matching of the impedance of the waveguide (7) with the impedance of the window system (8, 10) and the reaction vessel (11).

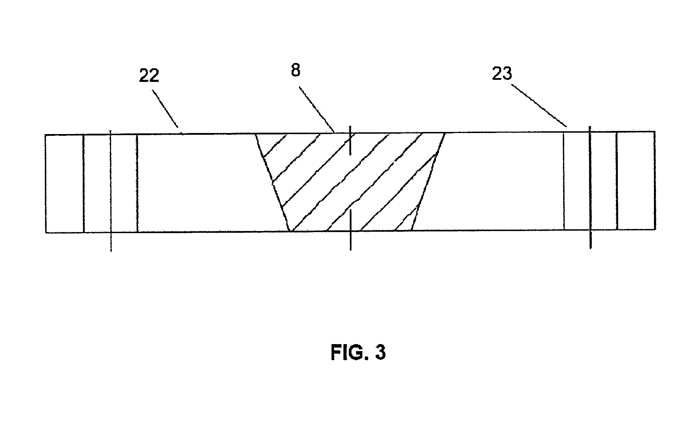

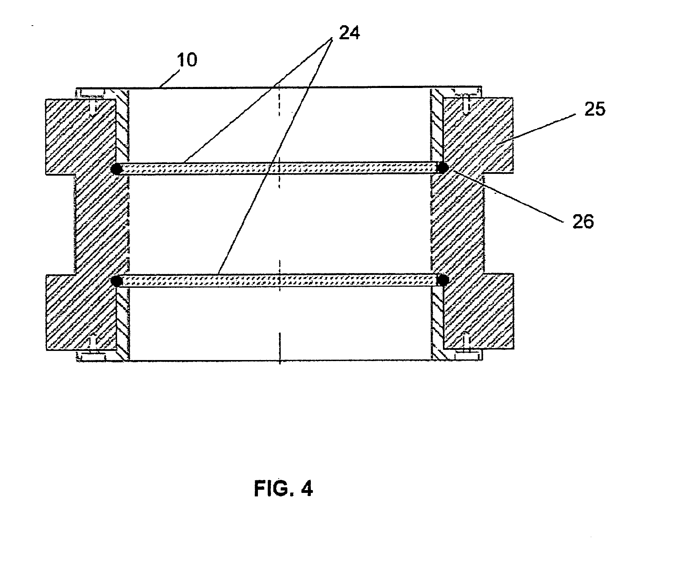

One preferable differential characteristic of the improved reactor of the invention is the system for transmitting microwaves and containing pressure with multiple windows (8, 10), which enables the system to withstand high pressures and maintain high microwave transmission throughout the whole period that the temperature of the reaction vessel is changing, and to tolerate variations in the source of microwave radiation. Various materials have been tested and used to make the multiple window system, such as, for example, sapphire, quartz, glass, and ceramics, among others, shown in detail in Figures 3 and 4.

One of the windows transparent to microwaves is a double window and made of a material with a dielectric constant which shows little temperature variation, and is preferably made of quartz. The other window is made of ceramic or sapphire, with a greater thickness then the double window. This other window is resistant to high pressures and refrigerated so as to maintain the temperature thereof close to ambient temperature irrespective of the temperature of the reaction vessel.

The special configuration of the improved reactor (1) allows the reaction vessel to operate at high temperature and high pressure in the presence or absence of hydrogen or other gases, and also guarantees good transmittance of microwave electromagnetic radiation, which can be pulsed or continuous. The device can operate at pressures varying from atmospheric pressure to 20 MPa, and process hydrocarbons, preferably at approximately 400°C, although this temperature can vary from room temperature to 500°C.

The reaction vessel (11) has external cladding to thermally insulate the system and also to contain any leakage of microwaves or reagents, maintaining the system hermetic.

Since it is cladded, the reaction vessel allows conventional heating of the feedstock by heat conduction using electrical resistances or other means, or heating or cooling by circulating fluids. This makes it possible to operate using conventional heat sources, or joint operation combining a conventional source with microwaves, or alternating operation with a conventional source or with a microwave source.

In addition, the reaction vessel (11) is also provided with an accessory subsystem (15) formed by a temperature sensor, a system for loading and collecting material and a circulation/agitation system, which allow the reaction vessel (11) to operate with highly viscous liquids, in the presence or absence of solids, and maintain the homogeneity of the reaction medium. The volume of feedstock should be calculated to cover the head (12) of the reaction vessel (11). The homogenization system can operate with circulation (by means of a centrifugal or pneumatic pump) or with agitation (mechanical or by bubbling through reactive or inert gases). Thus, the feedstock can be processed by continuous or batch operation, maintaining the homogeneity thereof. Connections for pressure sensors and safety and pressure release valves are also provided.

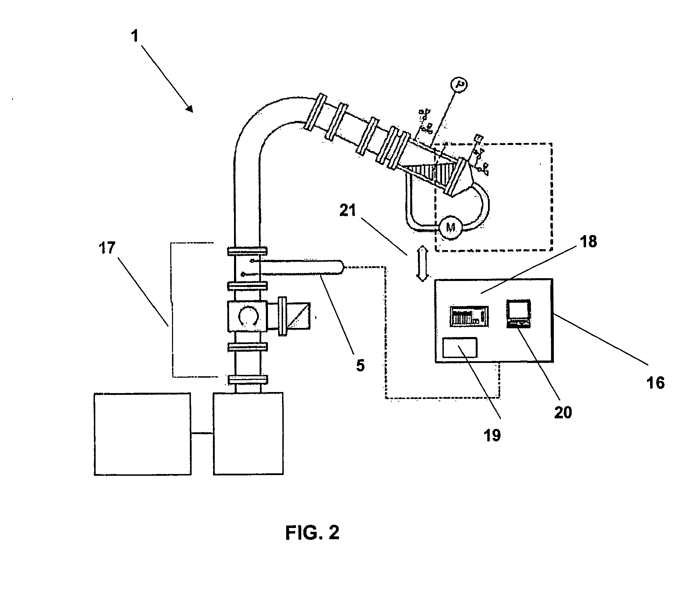

The entire microwave-assisted system for hydroprocessing feedstocks, including the improved device (1) described above is shown in Figure 2.

In addition, the improved reactor of the invention can be connected to another system, here termed a monitoring and control system, which enables measurement and monitoring of the variables involved in the process, as well as interaction with the same.

The system for processing feedstocks which is the object of the present invention, comprises the combination comprising the improved reactor (1) described above and an electronic control and supervision unit (16) where the return of information is controlled by means of the wave sensors (5) situated in the longitudinal portion of the instrumentalized waveguide (17) and directly connected to the electronic control and supervision unit (16).

Said electronic control and supervision unit (16) comprises a programmable logic controller PLC (18) which contains analogue and digital input and output modules for all of the signals of the field elements needed to control processing.

Said PLC digitalizes and processes the signal for the power of the microwave radiation (transmitted and reflected) identified by the wave sensors (5) by means of a computer program (software).

The electronic control and supervision unit (16) also includes a central management unit (19) provided with a monitor (20) as an interface with the operator, for which it has modules for signal processing and storage.

The electronic control and supervision unit (16) provides a graphic interface for the data processed and for the operator to accompany the process in a clearer and easily visualized manner. A data acquisition module (21) of the electronic control unit (16) serves as an interface between the field and process control elements.

Figure 3 presents a schematic representation of part of the apparatus, that contains the pressure and transmits the microwaves, composed of a conical window (8), where different materials were tested and assembled, preferably sapphire and ceramics, that allow the system to withstand high pressures, higher than 200 bar and a small temperature variation, pressed onto a metallic ring (22) that is cooled and supported (23) and fixed in the reactor.

Figure 4 presents a schematic drawing of another set, with a double window (10), with two disks (24). This window separates the reactor from the system supporting high temperatures, from room temperature up to 500 °C, but little pressure variation and it is connected to a metallic set (25) through gaskets (26). Made of, as an example of, grafoil, to allow the pressure tightness of the system when operates under high pressure and temperature.

As mentioned previously, the combination formed by the transparent windows in the third segment (shown in Figure 1) makes it possible to connect a microwave source with the reaction vessel which could be at high temperature and high pressure. This combination consists of a simple window (8) a circular waveguide (9) and a double window (10) which is linked directly to the reaction vessel (11) and is capable of withstanding conditions of high temperature and high pressure, including of hydrogen.

The purpose of the simple window (8) is to separate the stretch of the waveguide (7) which is at atmospheric pressure, from the part of the waveguide (9) which is at a pressure close to the pressure of the reaction vessel (11). The double window (10) has two conveniently spaced discs of dielectric material, and is preferably made of quartz. The properties of the window show little change with temperature so that the range of frequency within which it is transparent to microwaves remains constant. Since this window cannot stand a pressure difference greater than 1 MPa (10 bar/147 psi), provision is made for insertion of a third window conveniently separated from the double window by a circular waveguide, of quartz, which stands a pressure difference greater than 20 MPa (200 bar/2900 psi). This way, if the reaction vessel and the waveguide are very close the possibility of damaging the quartz window is small. This third window is refrigerated in order to avoid alterations in the dielectric properties thereof with temperature. The design of this combination of windows allows for broadening of the transparent frequency range, aided by impedance matching.

When the system is designed for the reaction vessel (11) to operate with a single window, this is refrigerated in order to avoid changes in temperature which could alter the dielectric properties thereof. The window is made of alumina, sapphire or quartz, but preferably from ceramic, suitably sealed with gaskets of material such as, for example, Grafoil, to guarantee hermetic sealing when operating under conditions of high temperature and high pressure. When the material used is a ceramic, it is also possible to use a configuration in which a conical segment of ceramic is welded to a flange of special metal which has the same expansion coefficient as the ceramic. Thus, the system can have multiple windows or windows of different areas and thicknesses capable of withstanding high pressures and high temperatures.

### DETAILED DESCRIPTION OF THE PREFERRED FORM FOR CARRYING OUT THE INVENTION

The system of the present invention can be operated in three different modes: conventional heating or cooling, microwave heating combined with conventional heating or cooling, and microwave heating alone. The automatic control system described above allows pulsed or continuous application of microwaves.

For example, but without restricting the invention, microwave radiation can be carried out continuously at a power preferably of 2 kW; however, said power can vary between 2 and 3 kW. In the case of pulsed energy, emission the maximum power in this same situation is preferably close to up to 8 kW. The microwave frequency employed in this example is 2.45 GHz. Sources of high microwave power can be used to increase the scale, or multiple low power microwave sources can be used, or a planned combination of microwave sources to contain a level of power and distribution of the microwave energy suited to the scale.

The degree to which a specified material absorbs microwave energy in the form of heat and can be penetrated by the radiation can be calculated from the dielectric loss factor (loss factor), which depends on the material and the frequency of the microwaves. Thus, other frequencies can be used, exploiting the absorption and depth of a given frequency applied to a specific feedstock and catalyst, maximizing the interaction between the microwaves and the active sites of said catalyst.

It will be clear to persons skilled in the art that the dimensions of the waveguides and windows of the improved invention should be adjusted in accordance depending on the selected microwave frequency.

The application of microwave electromagnetic radiation offers an alternative form of excitation and selective heating of the feedstock, such as, for example, crude petroleum or fractions thereof, mixtures of hydrocarbons even in multiphase mixtures of oils in the form of sludge, emulsions of petroleum in water and materials such as catalysts which absorb microwaves, allowing an increase in the kinetics and effectiveness of the reactions and enabling improvements in yield and also in the quality of the feedstock processed.

The hydrocarbons, in the presence of a catalyst, or other materials which absorb microwaves, can be mixed with hydrogen at high pressure and the mixtures exposed to microwave electromagnetic radiation with a frequency of 2.45 GHz and power of up to 3 kW, for example. Thus, although not limited to the examples with follow, the reactor and system of the invention can be used in processes for reducing the content of sulphur (HDS - hydrodesulphurization) of nitrogen (HDN - hydro-denitrilation) of oxygen (HDO - hydrodeoxygenation), of aromatics (HDA - hydrodearomatization), decreasing naphthenic acidity and metals (HDM - hydrodemetalization) as well as for breaking carbon chains such as, for example, hydrocracking (HCC) of heavy petroleum and fractions thereof, improving the quality of the feedstock being processed.

One advantage of the system of the invention is that it allows any type of catalyst to be added to the hydrocarbon feedstock, the active sites of which can have their performance enhanced by the action of the microwaves.

Another advantage of the system is that it allows operation at lower temperatures and pressures (hydrogen or other gases) than analogous systems without microwave assistance, while obtaining similar results in terms of product yields and operating cost/benefit ratio.

The system described can be designed in different scales depending on operating needs. Thus, the microwave power, and volume and form of the reaction vessels are adaptable, and various different frequencies of microwave radiation can be used.

Another advantage of the reactor and systems herein presented is the possibility of use thereof in storage tanks in ships for transporting oil. During the period of storage or transport, a sufficiently small microwave unit can be added to the installations to process and improve the quality of the oil, especially as regards acidity and viscosity. This application is especially useful for processes which do not use hydrogen and can be carried out during storage or transport, especially of oils and fractions.

However, it should be clear that the invention is not limited to the cited examples. Those skilled in the art can conceive of other applications of the device of the invention which do not deviate from the inventive concept herein described.

## Claims

1. An apparatus for microwave-assisted processing of feedstocks, said apparatus comprising:
a reaction vessel, and
a waveguide for transmitting microwaves into said
reaction vessel,
wherein said reactor is constructed and arranged such that microwaves transmitted by said waveguide have an angle of incidence with respect to a surface of a reaction medium contained in said reaction vessel which is an acute angle.

2. The apparatus according to claim 1, wherein microwaves transmitted by said waveguide and propagating inside said reaction vessel are subject to a gradual variation in impedance within said reaction vessel.

3. The apparatus according to claim 1 or claim 2, wherein said waveguide is inclined at an angle to the horizontal.

4. The apparatus according to any one of the previous claims, wherein the inclination of said waveguide is adjustable between 10° and 40° to the horizontal.

5. The apparatus according to any one of the previous claims, wherein the inclination of said waveguide is approximately 25° to the horizontal.

6. The apparatus according to any one of the previous claims, wherein the reflection of microwaves from said reaction medium surface is less than the reflection that would be obtained if the angle of incidence were 90°.

7. The apparatus according to any one of the previous claims, wherein said reaction medium comprises a liquid phase.

8. The apparatus according to any one of the previous claims, wherein said reaction vessel is arranged such that reaction medium takes the form of a wedge.

9. The apparatus according to any one of the previous claims, wherein the surface of said reaction medium defines a transition zone between a gas phase and said reaction medium, and said gradual variation in impedance occurs as microwaves cross said transition zone.

10. The apparatus according to any one of the previous claims, wherein said reaction vessel is constructed to operate at pressures from atmospheric pressure to 20 MPa.

11. The apparatus according to any one of the previous claims, wherein said reaction vessel is constructed to operate at temperatures from room temperature to 500°C.

12. The apparatus according to any of the previous claims, wherein said apparatus can be operated in three different modes: conventional heating or cooling, microwave heating combined with conventional heating or cooling, and microwave heating alone.

13. The apparatus according claim 12 wherein said reaction vessel further comprises means for heating or cooling by conduction.

14. The apparatus according to claim 12 or 13, further comprising means for heating or cooling the feedstock by circulating fluids.

15. The apparatus according to any one of the previous claims, wherein said reaction vessel is constructed such that it can be operated in continuous or batch processing modes.

16. The apparatus according to any one of the previous claims, wherein said reaction vessel comprises a head piece, and said reaction vessel is arranged such that said reaction medium covers said head piece.

17. The apparatus according to any one of the previous claims, wherein said waveguide is connected to said reaction vessel via windows substantially transparent to microwaves.

18. The apparatus according to claim 17, further comprising:
a first lower segment, comprising a low-noise power source, a microwave-emitting magnetron valve, a microwave non-return isolator and sensors of transmitted and reflected waves;
a second segment, comprising a first stretch of said waveguide, with a rectangular cross-section, which links parts which can be freely orientated with parts that need to be arranged at a suitable inclination to the horizontal, and which, after said inclination, is connected to a second, transition, stretch between sections of said waveguide with rectangular and circular cross-sections, responsible for the transition between the rectangular and circular sections of said waveguide and for matching the impedances with said windows substantially transparent to microwaves, and which function to guide said microwaves towards said reaction vessel;
a third, upper, segment comprising said windows substantially transparent to microwaves, which are intercalated by a stretch of said waveguide, said windows being connected in turn to a fourth segment, which comprises said reaction vessel.

19. The apparatus according to claim 18, wherein said microwave-emitting magnetron valve provides pulsed emission of magnetic energy.

20. The apparatus according to claim 19, wherein the microwave frequency is 2.45 GHz.

21. The apparatus according to claim 18, wherein said microwave-emitting magnetron valve provides continuous emission of magnetic energy.

22. The apparatus according to claim 21, wherein microwave radiation can be carried out continuously with a power in the range 2-3 kW.

23. The apparatus according to claim 22, wherein microwave radiation is carried out continuously at a power of 2 kW.

24. The apparatus according to any one of claims 18-23, wherein said microwave-emitting magnetron valve can be scaled to operate with multiple powers of microwaves.

25. The apparatus according to any one of claims 18-24, wherein said second segment has a suitable curvature, needed to connect said waveguides of said first and third segments respectively.

26. The apparatus according to any one of claims 18-25, further comprising means for adjusting said third, upper, segment.

27. The apparatus according to any one of claims 18-26, wherein said windows enable the apparatus to withstand high pressures and maintain high microwave transmission throughout the whole period that the temperature of said reaction vessel is changing, and also to tolerate variations in the frequency of the source.

28. The apparatus according to any one of claims 18-27, wherein the material for said windows is selected from sapphire, quartz, glass, and ceramics.

29. The apparatus according to any one of claims 18-28, wherein the dimensions of said waveguide and windows are adjusted in accordance with a selected microwave frequency.

30. The apparatus according to any one of the previous claims, wherein said processing comprises hydroprocessing.

31. The apparatus according to any one of the previous claims, wherein said reaction vessel has external cladding to thermally insulate the apparatus and also to contain any leakage of microwaves or reagents, keeping the entire apparatus hermetic.

32. The apparatus according to any one of the previous claims, wherein said reaction vessel is provided with an accessory subsystem formed by a temperature sensor, a system for loading and collecting material and a circulation/agitation system.

33. The apparatus according to any one of the previous claims, wherein the apparatus is connected to an electronic control and supervision unit which enables interaction with, and measurement and monitoring of, the variables involved in the process.

34. The apparatus according to claim 31, wherein the return of information to said electronic control and supervision unit is by means of wave sensors situated in a longitudinal portion of said waveguide, which sensors are directly connected to said electronic control and supervision unit.

35. The apparatus according to claim 32, wherein in that said electronic control and supervision unit comprises:
a programmable logic controller PLC which contains analogue and digital input and output modules for all of the signals of the field elements needed to control the processing system, and which digitalizes and processes the signal for the microwave radiation (transmitted and reflected) identified by the wave sensors by means of a computer program;
a central management unit provided with a monitor as an interface with the operator, which has additional integrated modules for signal processing and storage, a graphics interface to display the data processed;
and a data acquisition module, which serves as an interface between the field and process control elements.

36. The apparatus according to any previous claim, wherein the apparatus can be designed in different scales depending on operating needs, adapted to the power of the microwaves, and the volume and shape of said reaction vessel, and able to use microwave radiation of different frequencies.

37. The apparatus according to any previous claim, wherein said apparatus can be used in processes to decrease naphthenic acidity, the content of sulphur (HDS - hydrodesulphurization) of nitrogen (HDN - hydro-denitrilation), of oxygen (HDO - hydrodeoxygenation) of aromatics (HDA - hydrodearomatization) and of metals (HDM - hydrodemetalization), as well as for breaking carbon chains such as, for example, hydrocracking (HCC) of heavy petroleum and fractions thereof.

38. The apparatus according to any previous claim, wherein said feedstock comprises crude oil, mixtures of hydrocarbons, from petroleum processing, oils of plant origin, biodiesel, organic products such as alcohols and esters, inorganic products end mixtures of these products, in the presence or absence of a catalyst, and in the presence of hydrogen or other gases.

39. The apparatus according to any previous claim, wherein said apparatus can be used for processing crude petroleum or fractions thereof, mixtures of hydrocarbons, including in multiphase mixtures of oils in the form of sludge and emulsions of petroleum in water, and materials such as catalysts which absorb microwaves.

40. The apparatus according to any previous claim, wherein the feedstock comprises any type of catalyst or microwave absorbing material with active sites which can have their performance enhanced by the action of the microwaves.

41. A method for microwave-assisted processing of feedstocks, said method comprising:
transmitting microwaves via a waveguide into a reaction vessel containing a reaction medium, such that said microwaves have an angle of incidence with respect to a surface of said reaction medium which is an acute angle.

42. The method according to claim 41 wherein microwaves transmitted by said waveguide and propagating inside said reaction vessel are subject to a gradual variation in impedance within said reaction vessel.

43. The method according to claim 41 or claim 42, wherein said waveguide is inclined at an angle to the horizontal.

44. The method according to any one of claims 41 to claim 43, wherein the reflection of microwaves from said reaction medium surface is less than the reflection that would be obtained if the angle of incidence was 90°.

45. The method according to any one of claims 41 to claim 44 wherein said reaction medium comprises a liquid phase.

46. The method according to any one of claims 41 to claim 45, wherein said reaction vessel is arranged such that reaction medium takes the form of a wedge.

47. The method according to any one of claims 41 to claim 46, wherein said surface of said reaction medium defines a transition zone between a gas phase and said reaction medium, and said gradual variation in impedance occurs as microwaves cross said transition zone.

48. The method according to any one of claims 41 to claim 47, wherein said processing occurs at pressures from atmospheric pressure to 20MPa.

49. The method according to any one of claims 41 to claim 48, wherein said processing occurs at temperatures from room temperature to 500°C.

50. The method according to any one of claims 41 to claim 49, wherein the method further comprises interaction with, and measurement and monitoring of, the variables involved in the process.

51. The method according to any one of claims 41 to claim 50, wherein said processing comprises hydroprocessing.
